(19) Europäisches Patentamt
European Patent Office
Office européen des brevets

(11) **EP 4 332 616 A1**

(12) # EUROPEAN PATENT APPLICATION
published in accordance with Art. 153(4) EPC

(43) Date of publication:
**06.03.2024  Bulletin 2024/10**

(21) Application number: **21939067.1**

(22) Date of filing: **15.12.2021**

(51) International Patent Classification (IPC):
***G01S 7/48*** (2006.01)

(86) International application number:
**PCT/CN2021/138322**

(87) International publication number:
**WO 2022/227608 (03.11.2022 Gazette 2022/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.04.2021  CN 202110474761**

(71) Applicant: **Hesai Technology Co., Ltd.
Shanghai 201821 (CN)**

(72) Inventors:
• **HU, Tianjian
  Shanghai 201821 (CN)**

• **CHEN, Jie
  Shanghai 201821 (CN)**
• **KUANG, Jie
  Shanghai 201821 (CN)**
• **LI, Li
  Shanghai 201821 (CN)**
• **LI, Yanfang
  Shanghai 201821 (CN)**
• **WANG, Yizun
  Shanghai 201821 (CN)**
• **XIANG, Shaoqing
  Shanghai 201821 (CN)**

(74) Representative: **Fish & Richardson P.C.
Highlight Business Towers
Mies-van-der-Rohe-Straße 8
80807 München (DE)**

(54) **METHOD FOR MEASURING REFLECTIVITY OF TARGET OBJECT BY USING LIDAR, AND LIDAR**

(57)     Methods and apparatuses for measuring reflectivity of a target object by using laser radar (LIDAR) are provided. In an implementation, a method comprising: a detector of the LIDAR receives an echo of a detection beam reflected by a target object, and converts the echo into an electrical signal to obtain an echo photocurrent integral. The reflectivity of the target object is determined based on a predetermined reflectivity calibration curve and a photocurrent integral of the echo.

10

receiving, by a detector of the LiDAR, an echo of a detection beam reflected by the target object, and converting the echo into an electrical signal to obtain an echo photocurrent integral — S101

determining the reflectivity of the target object according to a preset reflectivity calibration curve and the echo photocurrent integral — S102

**Fig. 3**

EP 4 332 616 A1

**Description**

**TECHNICAL FIELD**

The present disclosure relates to the technical field of laser detection, especially to a method for measuring the reflectivity of a target object using a LiDAR.

**BACKGROUND**

A LiDAR emits optical detection pulses through a laser, converts echo's optical pulses reflected by a target object into echo's electrical pulses through a photodetector, calculates the time of flight (ToF) of light based on the time of emitting the optical detection pulses and the time of receiving the echo's optical pulses, and obtains a distance from the target object in combination with the speed of light. Moreover, an echo light intensity is characterized based on signal features of the echo's electrical pulses, and the reflectivity of the target object is calculated according to the echo light intensity and an equivalent emitted light intensity attenuated by distance.

A traditional photodetector is an avalanche photodiode (APD), which has a relatively low photoelectric gain and is not conducive to long-range detection of the radar; to increase the detection distance, the aperture of the receiving lens is increased to increase the volume of the LiDAR; furthermore, the system is configured to arrange a high-bandwidth amplification circuit for each detector to amplify electrical pulse signals, causing increases to the volume, power consumption, and cost of the LiDAR.

A photodiode operating in Geiger mode utilizes the avalanche discharge mechanism to obtain a high gain, referred to as a single photon avalanche diode (SPAD). When a reverse bias exceeds its rated breakdown voltage, a needed high electric field gradient can be generated on the PN junction. As photons are incident into the SPAD, the carrier excited by the photons can trigger an avalanche effect under the influence of the electric field. However, once such current is activated or flows, it should be stopped or "extinguished." By a quenching resistor, the voltage at both ends of the diode is reduced below the breakdown voltage, thereby stopping the avalanche. Then the SPAD is recharged to a reverse bias voltage exceeding the breakdown voltage and used for detecting subsequent photons. During the time between the avalanche generated by the SPAD and the recovery to a reverse bias voltage exceeding the breakdown voltage, the SPAD does not respond to subsequent photons.

In order to overcome the limitation that a single SPAD cannot simultaneously measure a plurality of photons, a silicon photomultiplier (SiPM) integrates an array of dense small independent SPAD sensors, each with its own quenching resistance. Each independently operating SPAD and quenching resistance are known as a micro-unit. When one micro-unit in the SiPM responds to an absorbed photon, the other micro-units still have the capability of detecting photons.

The SiPM has extremely high photoelectric gain (e.g., $10^6$ orders of magnitude), which can achieve detection of nW-level energy of echo waves, while an APD requires mW-level energy of echo waves for effective detection. Compared with the APD, the SiPM as a photodetector can effectively reduce the power consumption of a LiDAR. Moreover, SiPMs can be manufactured using CMOS technology, which facilitates its integration into microchips, and can reduce the LiDAR's volume while improving the assembly efficiency, making it suitable for large-scale production.

A LiDAR utilizing a SiPM as a detector typically uses the leading edge slope and pulse width of the echo's electrical pulses as signal features for reflectivity measurement. However, the response signal of the SiPM to a photon flow has strong statistical fluctuations and nonlinear characteristics. Signal features of echo energy of the same intensity may have a random jitter, which may lower the measurement accuracy of the reflectivity; additionally, the number of micro-units in the SiPM is limited, and, under strong light, almost all the micro-units of the SiPM are very easily triggered within a recovery time (of between 10 and 20 nanoseconds), causing the detector to be saturated. At this time, the echo's electrical signal features almost stop changing with the reflectivity of the target object, causing a very small dynamic range of measurement of reflectivity. Therefore, the problem of low accuracy and small dynamic range in measuring reflectivity based on SiPM devices has become one of the main obstacles for the application of SiPM in LiDAR products.

The content in the Background merely involves the technology known by the disclosers and does not necessarily represent the existing technology in the field.

**SUMMARY**

In view of at least one disadvantage in the existing technology, the present disclosure provides a method for measuring the reflectivity of a target object by using a LiDAR, the method comprising:

S101: receiving, by a detector of the LiDAR, an echo of a detection beam reflected by the target object, and converting the echo into an electrical signal to obtain an echo photocurrent integral;

S102: determining the reflectivity of the target object according to a predetermined reflectivity calibration curve and the echo photocurrent integral.

According to an aspect of the present disclosure, the step S101 further comprises:
integrating the electrical signal within a first predetermined time to obtain a first photocurrent integral corresponding to the electrical signal.

According to an aspect of the present disclosure, the step S101 further comprises:
obtaining a second photocurrent integral corresponding to ambient light, and using a difference between the first photocurrent integral and the second photocurrent integral as the echo photocurrent integral.

According to an aspect of the present disclosure, the step S101 further comprises:

receiving, by the detector, ambient light and converting into an electrical signal; and

integrating the electrical signal generated by the ambient light within a second predetermined time to obtain the second photocurrent integral.

According to an aspect of the present disclosure, the first predetermined time is not less than a total time for one measurement by the detector.

According to an aspect of the present disclosure, the detector is a silicon photomultiplier, and the electrical signal is an electrical signal output at an anode of the silicon photomultiplier.

According to an aspect of the present disclosure, the LiDAR determines a distance from the target object according to a time of emitting the detection beam and a time of receiving the echo, the step S102 further comprising:
determining the reflectivity of the target object according to a predetermined calibration curve of reflectivity, photocurrent integral and distance from the target object, and the echo photocurrent integral.

According to an aspect of the present disclosure, the step S102 further comprises:
calculating the reflectivity of the target object corresponding to the echo photocurrent integral by interpolation method, according to predetermined calibration curves of photocurrent integrals and distances from the target object corresponding to a plurality of predetermined reflectivity respectively.

According to an aspect of the present disclosure, the echo comprises a plurality of optical pulses, the detector converts the plurality of optical pulses into a plurality of electrical pulses, and the echo photocurrent integral is an accumulative integral of the plurality of electrical pulses.

According to an aspect of the present disclosure, the method further comprises:
obtaining a temperature of the detector of the LiDAR and converting the echo photocurrent integral into an echo photocurrent integral at an equivalent calibration temperature.

According to an aspect of the present disclosure, the method further comprises:
converting the echo photocurrent integral into an echo photocurrent integral at an equivalent calibration PDE, when the second photocurrent integral is greater than a predetermined threshold.

According to an aspect of the present disclosure, the LiDAR comprises a plurality of detectors, the method further comprising:
setting a calibration curve of the reflectivity, photocurrent integral, and distance from the target object corresponding to each detector respectively.

The present disclosure also provides a LiDAR, comprising:

a transmitting unit configured to emit a detection beam for detecting a target object;

a receiving unit comprising at least one detector, and configured to receive an optical signal and convert the optical signal into an electrical signal; and

a processing unit configured to obtain an echo photocurrent integral corresponding to an echo of the detection beam reflected by the target object, and determine the reflectivity of the target object according to a predetermined reflectivity calibration curve and the echo photocurrent integral.

According to an aspect of the present disclosure, the LiDAR further comprises:
an integrating unit coupled with the detector, and configured to integrate the electrical signal within a predetermined time.

According to an aspect of the present disclosure, the detector is a silicon photomultiplier, and the integrating unit is coupled with an anode of the detector.

According to an aspect of the present disclosure, the integrating unit comprises an RC integrating circuit.

According to an aspect of the present disclosure, the integrating unit further comprises an operational amplifier, the RC integrating circuit being coupled with a first input end of the operational amplifier; and an output end of the operational amplifier being coupled with a second input end of the operational amplifier through a resistor.

According to an aspect of the present disclosure, the LiDAR further comprises:
a sampling unit coupled with the integrating unit, and configured to sample outputs of the integrating unit.

According to an aspect of the present disclosure, the LiDAR further comprises:
a temperature detection unit for detecting a temperature of the detector.

A preferred embodiment of the present disclosure provides a method for measuring the reflectivity of a target object by means of a photocurrent integral. Based on long-term accumulation of a response current of a photodetector to photons, the method provided by the present disclosure has low power consumption, high accuracy, high measurement precision, and a large dynamic range, compared to existing technology methods for measuring reflectivity by measuring the peak intensity, pulse width, slope of the leading edge and other signal features of echo's electrical pulses. Especially, the adverse effects caused to reflectivity measurement by defects in the signal features of echo's electrical pulses, such as random jitter, nonlinearity, easy saturation, and a small dynamic range, can be overcome, thereby well promoting the wide application of silicon photomultiplier devices in the LiDAR field.

## BRIEF DESCRIPTION OF DRAWINGS

The drawings that constitute part of the present disclosure are provided for further understanding the present disclosure, which, along with the embodiments of the present disclosure, are used for explaining the present disclosure, and do not make any limitation of the same. In the drawings:

FIG. 1 schematically illustrates an internal structure of a silicon photomultiplier;

FIG. 2 schematically illustrates output signal waveforms at a fast output port of a silicon photomultiplier;

FIG. 3 illustrates a method for measuring the reflectivity of a target object using a LiDAR according to one preferred embodiment of the present disclosure;

FIG. 4 schematically illustrates a calibration curve of a predetermined reflectivity according to one preferred embodiment of the present disclosure;

FIG. 5 schematically illustrates the decrease in detection efficiency of a silicon photomultiplier under strong ambient light;

FIG. 6A illustrates a calibration method for predetermined reflectivity according to one preferred embodiment of the present disclosure;

FIG. 6B schematically illustrates the relevant equipment used in the calibration method of FIG. 6A;

FIG. 7 schematically illustrates a LiDAR according to one preferred embodiment of the present disclosure;

FIG. 8A schematically illustrates an integrating circuit according to one preferred embodiment of the present disclosure; and

FIG. 8B schematically illustrates an output waveform of the integrating circuit of FIG. 8A.

## DESCRIPTION OF EMBODIMENTS

In the following, only some explanatory embodiments are briefly described. The described embodiments may be modified in various different ways without departing from the spirit or scope of the present disclosure, as would be apparent to those skilled in the art. Accordingly, the drawings and descriptions are to be regarded as illustrative and not restrictive in nature.

In the description of the present disclosure, it needs to be understood that the orientation or position relations denoted by such terms as "central" "longitudinal" "latitudinal" "length" "width" "thickness" "above" "below" "front" "rear" "left" "right" "vertical" "horizontal" "top" "bottom" "inside" "outside" "clockwise" "counterclockwise" and the like are based on the orientation or position relations as shown in the accompanying drawings, and are used only for the purpose of facilitating description of the present disclosure and simplification of the description, instead of indicating or suggesting that the denoted devices or elements must be oriented specifically, or configured or operated in a specific orientation. Thus, such terms should not be construed to limit the present disclosure. In addition, such terms as "first" and "second" are only used for the purpose of description, rather than indicating or suggesting relative importance or implicitly indicating the number of the denoted technical features. Accordingly, features defined with "first" and "second" may, expressly or implicitly, include one or more of the features. In the description of the present disclosure, "plurality" means two or more, unless otherwise defined explicitly and specifically.

In the description of the present disclosure, it needs to be noted that, unless otherwise specified and defined explicitly, such terms as "installation" "coupling" and "connection" should be broadly understood as, for example, fixed connection, detachable connection, or integral connection; or mechanical connection, electrical connection or intercommunication; or direct connection, or indirect connection via an intermediary medium; or internal communication between two elements or interaction between two elements. For those skilled in the art, the specific meanings of such terms herein can be construed in light of the specific circumstances.

Herein, unless otherwise specified and defined explicitly, if a first feature is "on" or "beneath" a second feature, this may cover direct contact between the first and second features, or contact via another feature therebetween, other than the direct contact. Furthermore, if a first feature is "on," "above," or "over" a second feature, this may cover the case that the first feature is right above or obliquely above the second feature, or just indicate that the level of the first feature is higher than that of the second feature. If a first feature is "beneath," "below," or "under" a second feature, this may cover the case that the first feature is right below or obliquely below the second feature, or just indicate that the level of the first feature is lower than that of the second feature.

The disclosure below provides many different embodiments or examples so as to realize different structures described herein. In order to simplify the disclosure herein, the following describes the parts and arrangements embodied in specific examples. Of course, they are only for the explanatory purpose, not intended to limit the present disclosure. Besides, the present disclosure may repeat reference numbers and/or reference alphabets in different examples, and such repeat is for the purpose of simplification and clarity, which does not represent any relation among various embodiments and/or arrangements as discussed. In addition, the present disclosure provides examples of various specific processes and materials, but those skilled in the art can also be aware of application of other processes and/or use of other materials.

The embodiments of the present disclosure are introduced below with reference to the drawings. It should be appreciated that the embodiments described here are only for the purpose of illustrating and explaining, instead of limiting, the present disclosure.

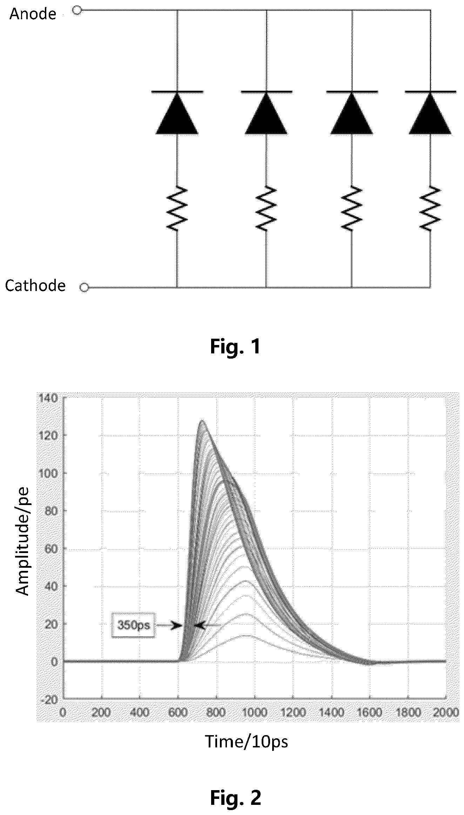

As shown in FIG. 1, a SiPM comprises a plurality of avalanche photodiodes and quenching circuits coupled with the avalanche photodiodes in one-to-one correspondence (shown in the figure are quenching resistors), one avalanche photodiode and one quenching circuit serving as one micro-unit, and a plurality of micro-units being connected in parallel to form the SiPM.

Some SiPM devices have a cathode, an anode and a third output terminal (Fast Output, not shown in the figure), each micro-unit having a capacitive coupling output end, and the capacitive coupling output ends of all the micro-units of one SiPM being connected in parallel to the Fast Output. Fast output pulses can be used for ultra-fast time measurement.

FIG. 2 illustrates typical waveforms of electrical pulse signals measured at a Fast Output terminal after SiPM receives optical pulses and converts the optical pulses into electrical pulse signals. Multiple measurements are conducted for the same target at the same distance, and each measurement corresponds to different echo energy intensities. The waveform distribution of the corresponding signals of the Fast Output of the SiPM is shown in FIG. 2. As the echo energy intensities increase, the pulse intensities of the Fast Output increases and the slopes of the leading edge are enlarged. Taking the Y-coordinate 20 as a noise threshold, for electrical pulses generated by echoes with different energy intensities, the time difference in their leading edges reaching the noise threshold is 350ps.

However, after multiple measurements of signals of the same intensity, data calculation and statistics revealed that there was a random jitter of several picoseconds to over one nanosecond in the slope of the leading edge of an electrical pulse. This is due to the fact that the photon flow follows the Poisson distribution and the optical crosstalk exists among the micro-units of the SiPM. The base width of the echo signal (the time width when the signal amplitude is greater than zero) is only a few nanoseconds, and thus such random jitter cannot be ignored, causing the accuracy in the reflectivity measurement to be relatively low.

On the other hand, as the signal intensity changes, the features of the echo's electrical pulses do not change monotonically. When the echo energy intensity is relatively low, the slopes of the leading edge of the electrical pulses increase with the increase of the energy intensities. But when the echo energy intensity is very high, the vast majority of the micro-units in the silicon photomultiplier are triggered in a short time and cannot be restored within the pulse time, causing that the slopes of the leading edge of the echo's electrical pulses no longer change with the echo energy intensities, and even resulting in decreases in the slopes of the leading edge. At this time, the features of the echo's electrical pulses are non-single-valued (one feature of the echo's electrical pulses corresponds to more than two echo energy intensities), which cannot characterize the change in the echo energy any longer, and the silicon photomultiplier reaches the limit of the dynamic range. Due to the limited number (hundreds) of micro-units in a silicon photomultiplier, reception saturation is prone to occur. Therefore, the dynamic range of the echo pulse feature characterizing energy is very small, causing the dynamic range of the reflectivity measurement to be very small.

In order to solve the technical problems about the features of electrical pulse signals, such as a large random jitter and a small dynamic range, in measuring reflectivity by a silicon photomultiplierbased LiDAR, the present disclosure proposes a method for calibrating and measuring reflectivity based on a photocurrent integral of a silicon photomultiplier.

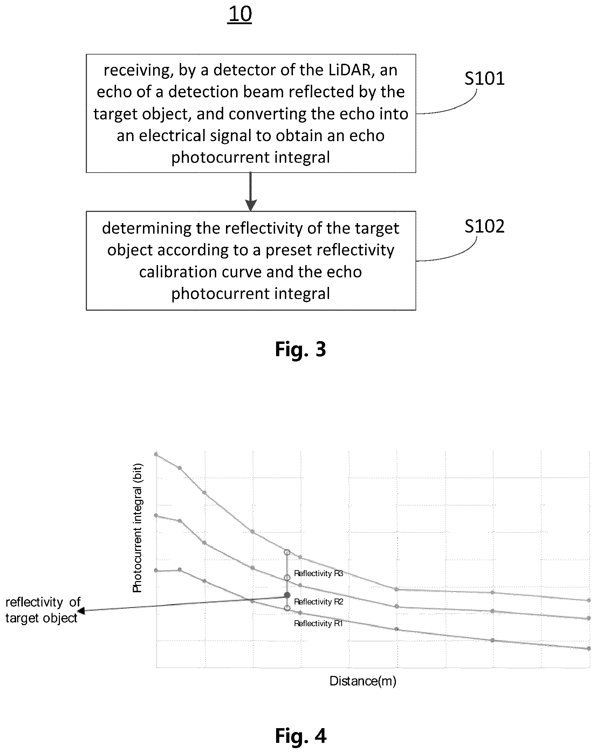

As shown in FIG. 3, according to one preferred embodiment of the present disclosure, the present disclosure provides a method 10 for measuring the reflectivity of a target object by using a LiDAR, comprising steps S101 and S102.

In step S101, a detector of the LiDAR receives an echo's optical signal of a detection beam reflected by the target object and converts same into an electrical signal to obtain an echo photocurrent integral.

In LiDAR application based on ToF measurement, a detection beam may comprise one or more optical pulses, and accordingly, an echo's optical signal is one or more optical signals corresponding to the detection beam. In response to the optical pulses, a photodetector converts the same into an electrical signal, and generates one or more electrical pulses corresponding thereto. The electrical pulse may be represented as a curve of change of the amplitude of an electrical signal over time, and the echo photocurrent integral may be represented by an area covered by the electrical pulse signal curve, and may be used to characterize an echo energy intensity.

In step S102, the reflectivity of the target object is determined according to a predetermined reflectivity calibration curve and the echo photocurrent integral.

According to one preferred embodiment of the present disclosure, for a target object having a reflectivity, a corresponding relationship between a distance from the target object and an echo photocurrent integral is obtained; further, for target objects with different reflectivity, the corresponding relationships between distances from the target objects and echo photocurrent integrals are obtained, respectively. The corresponding relationships are stored in a processing unit of the LiDAR, and then the processing unit can determine the reflectivity of a target object according to an echo photocurrent integral obtained in an actual detection and a predetermined reflectivity calibration curve.

In one preferred embodiment, the corresponding relationship between a distance from the target object and an echo photocurrent integral can be fitted as a calibration curve. As shown in FIG. 4, calibration curves respectively corresponding to distances from three target objects different in reflectivity and echo photocurrent integrals are predetermined.

The method 10 for measuring the reflectivity of the target object by using a LiDAR measures the reflectivity of the target object by obtaining the echo photocurrent integral. No random jitter exists in the echo photocurrent integral, which can accurately reflect an echo energy intensity, and thus improve the accuracy of the reflectivity measurement. Furthermore, the echo photocurrent integral is single-valued, and monotonically changes with the echo energy intensity, which increases the dynamic range of the reflectivity measurement.

According to one preferred embodiment of the present disclosure, in the method 10 for measuring the reflectivity of the target object by using the LiDAR, the step S101 further comprises:
integrating the electrical signal output by the detector of the LiDAR within a first predetermined time to obtain a first photocurrent integral corresponding to the electrical signal.

Integrating the electrical signal output by the detector within the first predetermined time can obtain an area covered by a curve of change of the amplitude of the electrical signal output by the detector over time, which can be used to characterize the energy intensity of the electrical signal output by the detector.

According to one preferred embodiment of the present disclosure, in the method 10 for measuring the reflectivity of the target by using the LiDAR, the step S101 further comprises: obtaining a second photocurrent integral corresponding to ambient light, and using a difference between the first photocurrent integral and the second photocurrent integral as the echo photocurrent integral.

The detector of the LiDAR converts the optical signal as received into the electrical signal, and what is actually obtained by integrating is a photocurrent integral corresponding to a sum of an echo's optical signal and an ambient light signal (denoted as a first photocurrent integral). Due to the difficulty in directly measuring a photocurrent integral corresponding to the echo's optical signal, and because the intensity of ambient light within a short time is stable, resulting in that a photocurrent integral corresponding to the ambient light signal remains basically constant within a unit time, thus through further measurement obtained is the photocurrent integral corresponding to the ambient light signal (denoted as a second photocurrent integral), and through subtraction obtained is the echo photocurrent integral corresponding to the echo's optical signal.

According to one preferred embodiment of the present disclosure, in the method 10 for measuring the reflectivity of the target object by using the LiDAR, the step S101 further comprises:

receiving, by the detector, ambient light and converting same into an electrical signal of the ambient light; and

integrating the electrical signal of the ambient light within a second predetermined time to obtain the second photocurrent integral.

Further, the first photocurrent integral contains electrical signal information generated on the photodetector by the echo of the detection beam reflected by the target object, and electrical signal information generated on the photodetector by the ambient light; while the second photocurrent integral is obtained only from the electrical signal generated on the photodetector by the ambient light. Therefore, the difference between the first photocurrent integral and the second photocurrent integral can accurately characterize an electrical signal intensity generated by the echo's optical signal and eliminate the influence of the ambient light.

As one mode of implementation, a time span of the first predetermined time is not less than a total time for one measurement by the detector. Alternatively, at least one laser of the LiDAR emits detection light for detection, and at least one detector is configured to receive an echo of the detection light reflected by a target object. The at least one laser and at least one detector form one detection channel of the LiDAR. The time span of the first predetermined time is not less than a total measurement time of one detection channel.

Specifically, within the total measurement time of one detection channel in the LiDAR, the detector receives optical signals and converts same into electrical signals. The optical signals include an echo's optical signal and an ambient light signal. An integrating circuit outputs an integral of the electrical signals within the total measurement time, namely the first photocurrent integral. The total measurement time may include a reserved ToF of the detection channel, a total pulse width of a plurality of optical pulses, and a sum of time intervals between the plurality of optical pulses. The reserved ToF is the time of flight corresponding to the farthest target detection distance of the LiDAR after the laser of the detection channel emits detection light. For example, if the detection light emitted by one detection channel comprises three optical pulses, each with a pulse width of 4ns, a time interval of 100ns between two adjacent optical pulses, and a reserved ToF of 400ns, then the first predetermined time interval is ≥ (400+3 * 4+2 * 100) ns.

Beyond the total measurement time of one detection channel, the SiPM may still generate weak photocurrent under the influence of ambient light. At this time, the integrating circuit performs integration for the electrical signal of the ambient light within the second predetermined time to obtain the second photocurrent integral.

Preferably, the time span of the first predetermined time and the time span of the second predetermined time are close. More preferably, the time span of the first predetermined time and the second predetermined time is in the order of 100ns.

In the mode of implementation of adopting a SiPM as the detector, the photocurrent integral is an integral over time of the photocurrent output from the anode of the SiPM. Although Fast Output can perform ultra-fast time measurement, it filters out more information and is not suitable for measuring an echo energy intensity. The integral over time of the photocurrent output from the SiPM anode increases with the increase of the echo energy intensity, which can accurately reflect the magnitude of the echo energy intensity and is conducive to obtaining reflectivity measurement results with a high accuracy.

As another mode of implementation, according to the signal processing of the LiDAR, when a certain echo signal is determined as an echo reflected by the target object, and distance information of the target object is obtained accordingly (e.g., the echo signal intensity exceeds the noise threshold), an integral within the first predetermined time corresponding to the time of receiving the echo signal is taken as the first photocurrent integral. Within the time range beyond the time of receiving the echo signal, an integral of the integrating circuit within the second predetermined time is acquired to obtain the second photocurrent integral.

According to one preferred embodiment of the present disclosure, the LiDAR determines a distance from the target object according to a time of emitting the detection beam and a time of receiving the echo. In the method 10 for measuring the reflectivity of the target object by using the LiDAR, the step S102 further comprises: determining the reflectivity of the target object according to a predetermined calibration curve of reflectivity, photocurrent integral and distance from the target object, and the echo photocurrent integral.

As shown in FIG. 4, the reflectivity calibration curve pre-stored in a processing unit the LiDAR includes a curve of a photocurrent integral value changing with distance under different reflectivity.

According to one preferred embodiment of the present disclosure, the reflectivity calibration curve includes a plurality of photocurrent integral-distance curves under different predetermined reflectivity. According to one preferred embodiment of the present disclosure, FIG. 4 contains a calibrated reflectivity value R1 of a predetermined reflecting plate 1, a reflectivity value R2 of a predetermined reflecting plate 2, and a reflectivity value R3 of a predetermined reflecting plate 3. According to an echo photocurrent integral $V_{d0}$ and a distance d from the target object, a reflectivity R of the target object can be determined through linear interpolation.

According to an equation of linear interpolation:

$$\frac{V_d(d,R2) - V_d(d,R1)}{R_2 - R_1} = \frac{V_{d0} - V_d(d,R1)}{R - R_1}$$

the following is obtained by deduction:

$$R = \frac{R1 + (V_{d0} - V_d(d,R1)) * (R2 - R1)}{V_d(d,R2) - V_d(d,R1)}$$

According to one preferred embodiment of the present disclosure, the method 10 for measuring the reflectivity of the target object by using the LiDAR further comprises:
obtaining temperature of the LiDAR's detector and converting the echo photocurrent integral into an echo photocurrent integral at an equivalent calibration temperature.

The predetermined echo photocurrent integral curve is obtained at a constant calibration temperature, while the gain of the photodetector may change at different temperatures, and the photocurrent integrals generated when receiving optical signals of the same intensity may vary, resulting in a drift phenomenon that may exist in an actual measured reflectivity value. Therefore, it is needed to perform temperature compensation for an actual measured echo photocurrent integral to obtain an echo photocurrent integral at the equivalent calibration temperature, so as to accurately calculate the reflectivity of the target object according to the calibration curve at the calibration temperature.

For a silicon photomultiplier, there exists a relationship between a photocurrent integral and a temperature as below:

$$\frac{V_{d,T0}}{V_d} = K * T + b$$

where $V_{d,T0}$ is a photocurrent integral calibrated at a distance of d and an ambient temperature of T0; $V_d$ is an echo photocurrent integral obtained by measuring the reflectivity of an object at a distance of d in the actual operation of a LiDAR; K and b are conventional coefficients, which are fixed values for a certain silicon photomultiplier; and T is an ambient temperature at which the LiDAR measures reflectivity in the actual operation.

The above relationship can be used for temperature compensation for a photocurrent integral of the silicon photomultiplier. Within the operating temperature range of the LiDAR, the echo photocurrent integral $V_d$ measured in real time can be converted into the echo photocurrent integral $V_{d,T0}$ at the equivalent calibration temperature T0.

Through the temperature compensation method provided by the preferred embodiment of the present disclosure, the actual measured reflectivity temperature drift was reduced by 80%.

According to one preferred embodiment of the present disclosure, the method 10 for measuring the reflectivity of the target object by using the LiDAR further comprises:

converting the echo photocurrent integral into an echo photocurrent integral at an equivalent PDE when the second photocurrent integral is greater than a predetermined threshold.

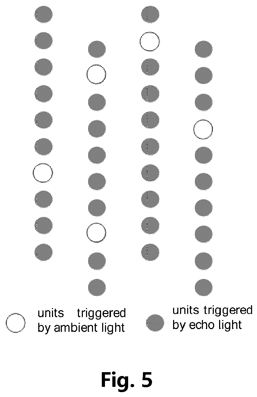

When the ambient light is relatively weak, the photocurrent integral corresponding to the echo's optical signal and the photocurrent integral corresponding to the ambient light signal can be linearly superimposed. However, when the ambient light is relatively strong, as shown in FIG. 5, the ambient light signal causes some SPADs in the silicon photomultiplier to saturate, and those SPADs cannot be triggered during the recovery time, causing the number of SPADs triggered by the echo's optical signal to be reduced and decreasing the response ability of the detector to the echo's optical signal, which can be equivalent to a decrease in the photon detection efficiency (PDE). Therefore, in the case of relatively strong ambient light, the echo photocurrent integral shall be compensated for, regarding the equivalent PDE affected by ambient light to obtain the echo photocurrent integral at an equivalent calibration PDE.

For a certain silicon photomultiplier, the equivalent PDE is only related to the first photocurrent integral corresponding to the output electrical signal of the silicon photomultiplier and the second photocurrent integral corresponding to the ambient light, while has nothing to do with the reflectivity of and distance from the target object, but may be affected by temperature.

According to one preferred embodiment of the present disclosure, let equivalent PDE = echo photocurrent integral/second photocurrent integral. A plurality of silicon photomultipliers of a LiDAR can be respectively calibrated with equivalent PDE under a constant temperature environment to determine calibration relationships between the equivalent PDE and the first and second photocurrent integrals, or between the equivalent PDE and the echo photocurrent integral (the difference between the first and second photocurrent integrals) and the first photocurrent integral, so as to perform ambient light compensation on the echo photocurrent integral to obtain the echo photocurrent integral at the equivalent calibration PDE.

Specifically, under ambient light of different intensities, the equivalent PDE is calculated by measuring the first photocurrent integral and the second photocurrent integral respectively; or the equivalent PDE is calculated based on the echo photocurrent integral and the second photocurrent integral, thereby obtaining the calibration relationships between the equivalent PDE and the first and second photocurrent integrals, or the calibration relationships between the equivalent PDE and the echo photocurrent integral and the second photocurrent integral.

Among them, one critical value of ambient light intensity can be set through early calibration, corresponding to the critical value $V_{B0}$ of the ambient photocurrent integral. As one mode of implementation, under calibration conditions, the critical value $V_{B0}$ corresponds to the second current integral of the calibration environment. When the second photocurrent integral $V_B$ corresponding to the ambient light signal is higher than the critical value $V_{B0}$, it is considered that the ambient light signal exceeds the ambient light intensity under the calibration conditions, and the equivalent PDE of the silicon photomultiplier is lower than the calibration value. At this time, ambient light compensation is required.

According to one preferred embodiment of the present disclosure, according to the aforesaid calibration relationships, an equivalent PDE corresponding to the actual measured photocurrent integral is determined; a ratio of the calibration PDE to the equivalent PDE is used as a compensation coefficient; and the echo photocurrent integral is multiplied by the compensation coefficient to obtain the echo photocurrent integral at the equivalent calibration PDE. For example, if an equivalent PDE is 1 under calibration conditions, and an equivalent PDE corresponding to the first and second photocurrent integrals as actual measured is 0.9, the compensation coefficient being 1/0.9, then it can be the compensated echo photocurrent integral under the equivalent calibration PDE = (first photocurrent integral - second photocurrent integral)/0.9.

When the second photocurrent integral $V_B$ corresponding to the ambient light signal is lower than the critical value $V_{B0}$, it is considered that the ambient light signal basically has little effect on the detection efficiency of the silicon photomultiplier.

According to one preferred embodiment of the present disclosure, the LiDAR comprises a plurality of detectors, and the method 10 for measuring the reflectivity of the target object by using the LiDAR further comprises:

setting a calibration curve of the reflectivity, photocurrent integral, and distance from the target object corresponding to each detector respectively.

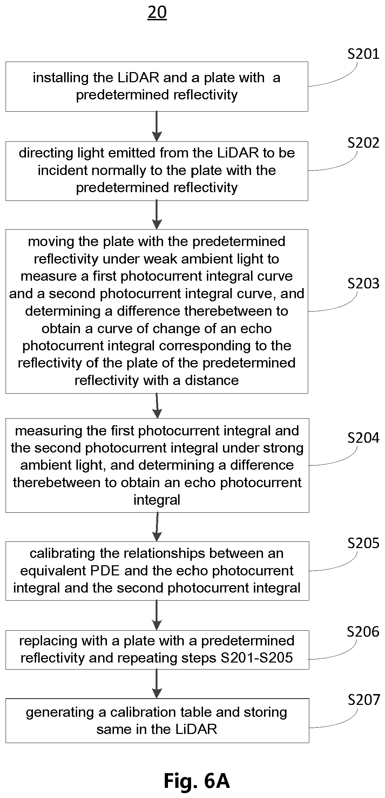

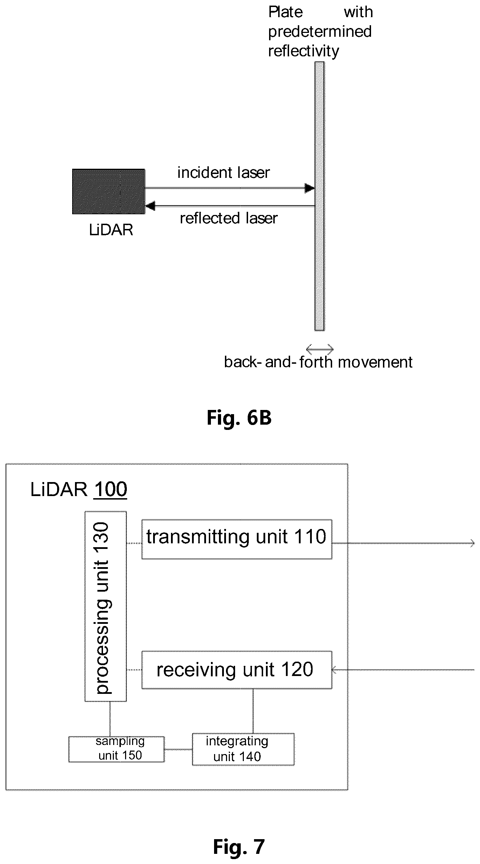

As shown in FIGS. 6A and 6B, the present disclosure provides a method 20 for calibrating the reflectivity for detection channels one by one in a LiDAR, comprising steps S201 to S207.

In step S201, installing the LiDAR and a plate with a predetermined reflectivity;

In step S202, directing light emitted from the LiDAR to be incident normally to the plate with the predetermined reflectivity;

In step S203, moving the plate with the predetermined reflectivity under weak ambient light (a cloudy day or indoor light) to measure a first photocurrent integral curve and a second photocurrent integral curve, and determining a difference therebetween to obtain a curve of change of an echo photocurrent integral corresponding to the reflectivity of the plate of the predetermined reflectivity with a distance;

In step S204, measuring the first photocurrent integral and the second photocurrent integral under strong ambient light, and determining a difference therebetween to obtain an echo photocurrent integral;

In step S205, calibrating the relationships between an equivalent PDE and the echo photocurrent integral and the second photocurrent integral;

In step S206, replacing with a plate with a predetermined reflectivity and repeating steps S201-S205;

In step S207, generating a calibration table and storing same in the LiDAR.

Among them, in step S205, the equivalent PDE is equal to a ratio of the echo photocurrent integral to the second photocurrent integral.

According to one preferred embodiment of the present disclosure, as shown in FIG. 7, the present disclosure provides a LiDAR 100, comprising a transmitting unit 110, a receiving unit 120, and a processing unit 130.

The transmitting unit 110 is configured to emit a detection beam for detecting a target object.

The receiving unit 120 comprises at least one detector configured to receive an optical signal and convert same into an electrical signal.

The processing unit 130 is configured to obtain an echo photocurrent integral corresponding to an echo of the detection beam reflected by the target object, and determine the reflectivity of the target object according to a predetermined reflectivity calibration curve and the echo photocurrent integral.

According to one preferred embodiment of the present disclosure, as shown in FIG. 7, the LiDAR 100 further comprises:

an integrating unit 140 coupled with the detector of the receiving unit 120 and configured to integrate the electrical signal within a predetermined time.

Preferably, an input end of the integrating unit 140 is coupled with an anode or cathode of the detector of the LiDAR to obtain an integral of an electrical signal output by the detector.

According to one preferred embodiment of the present disclosure, the detector is a silicon photomultiplier, and the integrating unit 140 is coupled with the anode of the silicon photomultiplier.

According to one preferred embodiment of the present disclosure, the integrating unit 140 comprises an RC integrating circuit.

According to another preferred embodiment of the present disclosure, the integrating unit 140 further comprises an operational amplifier, and the RC integrating circuit is coupled with a first input end of the operational amplifier.

Preferably, an output end of the operational amplifier is coupled with a second input end of the operational amplifier through a resistor.

According to one preferred embodiment of the present disclosure, as shown in FIG. 7, the LiDAR 100 further comprises:

a sampling unit 150 coupled with an output end of the integrating unit 140 and configured to sample outputs of the integrating unit 140 to obtain a photocurrent integral.

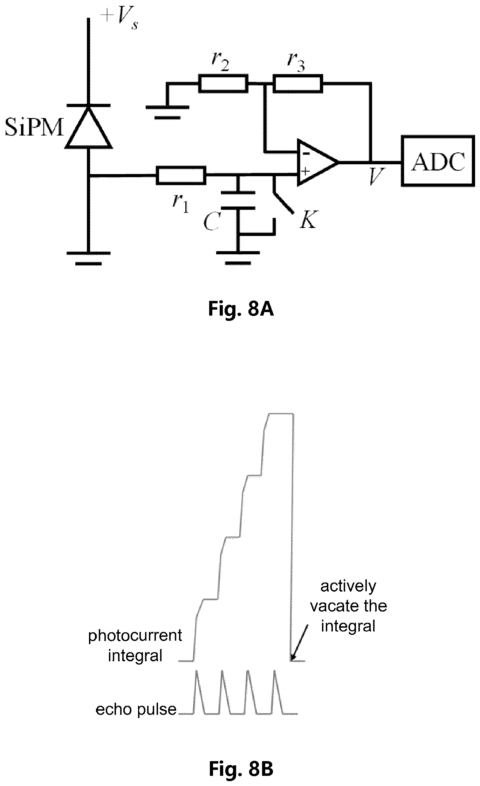

FIG. 8A illustrates an integrating unit 140 according to one embodiment of the present disclosure.

FIG. 8A is a schematic diagram of the integrating circuit adopted by the integrating unit 140 of the present disclosure, and FIG. 8B is an output signal diagram of this integrating circuit. Referring to FIGS. 8A and 8B, the detector of the LiDAR (preferably a silicon photomultiplier SiPM in the figures) is triggered to avalanche by photons under reverse bias Vs, and an electrical pulse output at the anode of the silicon photomultiplier SiPM is integrated through an RC circuit consisting of a resistor $r_1$ and a capacitor C, and converted into a voltage signal V through an operational amplifier.

In the embodiment shown in FIG. 8A, the sampling unit 150 is an analog digital converter (ADC), more preferably a low-speed ADC. The ADC can sample voltage signals output by the operational amplifier to obtain a peak value of the voltage signals as the photocurrent integral.

On the other hand, for the SiPM adopting a Fast Output electrical signal to calculate a distance from a target object, the integrating circuit of the present disclosure is coupled at an anode of the SiPM, which does not affect the timing measurement of Fast Output. According to the preferred embodiment of the present disclosure, accurate reflectivity information can be obtained according to the photocurrent integral output by the integrating circuit while the distance from the target object is measured fast.

Preferably, the integration period of the integrating circuit is the same as the detection period of the silicon photomultiplier SiPM, and can be the order of hundreds of nanoseconds, which greatly improves measurement precision compared to measuring a slope of the leading edge or pulse width of an echo pulse at the order of nanosecond to thereby determine the reflectivity of a target object in the existing technology. In the case of a random jitter in the echo's electrical pulse signal, the influence of the electrical pulse signals of the aforesaid devices can be eliminated by measuring the echo photocurrent integral to measuring the reflectivity, which further improves the accuracy of the reflectivity measurement. In addition, the echo photocurrent integral varies monotonically with the echo energy intensity, which is not non-single-valued, and is not affected by device saturation, thus improving the dynamic range of the reflectivity measurement.

According to the characteristics of SPAD, any defect in the avalanche multiplication region may become a carrier capture region when an avalanche occurs. When photons are incident on the SPAD, the charge generated based on the photoelectric effect passes through the avalanche multiplication region of the detector, and some carriers are captured by these defects. After the opticalelectrical conversion process is completed, the carriers released from these defects are accelerated by the electric field, which can cause further avalanche and generate a post-pulse associated with the above-mentioned avalanche pulse. The post-pulse can cause jitter in the waveform of electrical pulses output by the detector, causing significant errors to be produced in calculating reflectivity by using the slope of the leading edge and pulse width.

However, the intensity of the post-pulse increases with the increase of incident light intensity. The present disclosure strategically integrates electrical signals over time, which not only can eliminate the impact of a waveform jitter caused by the post-pulse, but also further utilize the law of post-pulse intensity increasing with the increase of echo energy, thereby more accurately reflecting the echo light intensity and improving the accuracy of calculation of the reflectivity of the target object.

As a mode of implementation, the lasers of the LiDAR correspond to the detectors (SiPMs) one by one, and when one laser is gated to emit light, the corresponding SiPM is activated to receive an echo signal. Before switching to the next silicon photomultiplier, the switch K of the integrating circuit is turned ON once to vacate the integrated charge on the capacitor C.

Those skilled in the art can understand that FIG. 8A only illustrates an integrating circuit adopted in the integrating unit of the present disclosure, and other circuit forms that implements integration for the photocurrent output by the detector of the LiDAR also fall within the scope of protection of the present disclosure.

According to one preferred embodiment of the present disclosure, the reflected echo of the detection beam comprises a plurality of optical pulses, and the echo photocurrent integral is an accumulative integral of the plurality of electrical pulses corresponding to the plurality of optical pulses.

As shown in FIG. 8B, within one detection cycle, the transmitting unit 110 emits a plurality of laser pulse signals (which may be 2-4), and at least one detector of the corresponding receiving unit 120 can also receive a plurality of echo's optical pulse signals for detection, and all echo's electrical pulses within one detection cycle are integrated. That is, during each ToF measurement, the transmitting unit 110 emits 2-4 laser pulse signals, and the receiving unit 120 receives reflected echoes of these 2-4 pulse signals for accumulative integration. The preferred embodiment of the present disclosure adopts an accumulative integration manner, which significantly reduces the measurement error caused by a single-pulse jitter and further improves the measurement precision of reflectivity.

Preferably, the LiDAR 100 comprises a plurality of integrating units 140 coupled with the plurality of detectors of the receiving unit 120 respectively, which, when the corresponding detectors perform detection, integrate the photocurrent output by same and output integration results. Alternatively, the integrating units 140 are coupled with the plurality of detectors of the receiving unit 120 respectively, and when the gated detectors perform detection, the integrating units 140 integrate the photocurrent output by same and output integration results.

According to one preferred embodiment of the present disclosure, the integrating unit 140 of the LiDAR 100 is further configured to:

integrate the electrical signal generated by the ambient light within a second predetermined time to obtain a second photocurrent integral corresponding to the ambient light; and

integrate an electrical signal within a first predetermined time when a detector of the LiDAR receives an echo, to obtain a first photocurrent integral.

According to one preferred embodiment of the present disclosure, the processing unit 130 is further configured to:
obtain the first photocurrent integral and the second photocurrent integral, and use a difference between the first photocurrent integral and the second photocurrent integral as an echo photocurrent integral.

Preferably, a time spans of the first predetermined time and the second predetermined time are close. More preferably, the first predetermined time and the second predetermined time are of the order of hundreds of nanoseconds.

According to one preferred embodiment of the present disclosure, the processing unit 130 is further configured to:

determine a distance from the target object according to a time of emitting the detection beam and a time of receiving the echo; and

determine the reflectivity of the target object according to a predetermined calibration curve of reflectivity, photocurrent integral and distance from the target object, and the echo photocurrent integral.

According to one preferred embodiment of the present disclosure, the processing unit 130 is further configured to:
calculate the reflectivity of the target object corresponding to the echo photocurrent integral by interpolation method according to a predetermined calibration curve of a plurality of predetermined reflectivity respectively corresponding to photocurrent integrals and distances from the target object.

According to one preferred embodiment of the present disclosure, the LiDAR further comprises a temperature detection unit for obtaining a temperature of the detector.

The processing unit 130 is further configured to: convert the echo photocurrent integral into an echo photocurrent integral under an equivalent calibration temperature according to the temperature of the detector of the LiDAR detector.

According to one preferred embodiment of the present disclosure, the processing unit 130 is further configured to:

Convert the echo photocurrent integral into an echo photocurrent integral at an equivalent calibration PDE when the second photocurrent integral is greater than a predetermined threshold.

According to one preferred embodiment of the present disclosure, the processing unit 130 is further configured to:

calculating the reflectivity of the target object respectively according to an echo photocurrent integral corresponding to each detector.

A preferred embodiment of the present disclosure provides a method for measuring the reflectivity of a target object by means of a photocurrent integral. Based on long-term accumulation of a response current of a photodetector to photons, the method provided by the present disclosure has low power consumption, high accuracy, high measurement precision, and a large dynamic range, compared to existing technology methods for measuring reflectivity by measuring the peak intensity, pulse width, slope of the leading edge and other signal features of echo's electrical pulses. Especially, the adverse effects caused to reflectivity measurement by defects in the signal features of echo's electrical pulses, such as random jitter, nonlinearity, easy saturation, and a small dynamic range, can be overcome, thereby well promoting the wide application of silicon photomultiplier devices in the LiDAR field.

Last but not least, it is noted that described above are just preferred embodiments of the present disclosure, which are not used to limit the present disclosure. Although the detailed description of the present disclosure has been provided with reference to the above-mentioned embodiments, those skilled in the art can still make modifications to the technical solution as recited in each of the above-mentioned embodiments, or conduct equivalent replacement of some technical features therein. Any modification, equivalent replacement, or improvement, if falling into the spirit and principles as stated herein, should be included in the scope of protection of the present disclosure.

## Claims

1. A method for measuring the reflectivity of a target object by using a LiDAR, the method comprising:

   S101: receiving, by a detector of the LiDAR, an echo of a detection beam reflected by the target object, and converting the echo into an electrical signal to obtain an echo photocurrent integral;
   S102: determining the reflectivity of the target object according to a predetermined reflectivity calibration curve and the echo photocurrent integral.

2. The method of claim 1, wherein the step S101 further comprises:
   integrating the electrical signal within a first predetermined time to obtain a first photocurrent integral corresponding to the electrical signal.

3. The method of claim 2, wherein the step S101 further comprises:
   obtaining a second photocurrent integral corresponding to ambient light, and using a difference between the first photocurrent integral and the second photocurrent integral as the echo photocurrent integral.

4. The method of claim 3, wherein the step S101 further comprises:

   receiving, by the detector, ambient light and converting same into an electrical signal; and
   integrating the electrical signal generated by the ambient light within a second predetermined time to obtain the second photocurrent integral.

5. The method of any one of claims 2 to 4, wherein the first predetermined time is not less than a total time for one measurement by the detector.

6. The method of any one of claims 1 to 4, wherein the detector is a silicon photomultiplier, and the electrical signal is an electrical signal output at an anode of the silicon photomultiplier.

7. The method of any one of claims 1 to 4, wherein the LiDAR determines a distance from the target object according to a time of emitting the detection beam and a time of receiving the echo, the step S102 further comprising:
   determining the reflectivity of the target object according to a predetermined calibration curve of reflectivity, photocurrent integral and distance from the target object, and the echo photocurrent integral.

8. The method of claim 7, wherein the step S102 further comprises:

calculating the reflectivity of the target object corresponding to the echo photocurrent integral by interpolation method according to predetermined calibration curves of photocurrent integrals and distances from the target object corresponding to a plurality of predetermined reflectivity respectively.

9. The method of any one of claims 1 to 4, wherein the echo comprises a plurality of optical pulses, the detector converts the plurality of optical pulses into a plurality of electrical pulses, and the echo photocurrent integral is an accumulative integral of the plurality of electrical pulses.

10. The method of claim 3 or 4, further comprising:
obtaining a temperature of the detector of the LiDAR and converting the echo photocurrent integral into an echo photocurrent integral at an equivalent calibration temperature.

11. The method of claim 10, further comprising:
converting the echo photocurrent integral into an echo photocurrent integral at an equivalent calibration PDE when the second photocurrent integral is greater than a predetermined threshold.

12. The method of any one of claims 1 to 4, wherein the LiDAR comprises a plurality of detectors, the method further comprising:
setting a calibration curve of the reflectivity, photocurrent integral, and distance from the target object corresponding to each detector respectively.

13. A LiDAR, comprising:

a transmitting unit configured to emit a detection beam for detecting a target object;
a receiving unit comprising at least one detector, and configured to receive an optical signal and convert the optical signal into an electrical signal; and
a processing unit configured to obtain an echo photocurrent integral corresponding to an echo of the detection beam reflected by the target object, and determine the reflectivity of the target object according to a predetermined reflectivity calibration curve and the echo photocurrent integral.

14. The LiDAR of claim 13, further comprising:
an integrating unit coupled with the detector, and configured to integrate the electrical signal within a predetermined time.

15. The LiDAR of claim 14, wherein the detector is a silicon photomultiplier, and the integrating unit is coupled with an anode of the detector.

16. The LiDAR of claims 14 or 15, wherein the integrating unit comprises a resistor-capacitor (RC) integrating circuit.

17. The LiDAR of claim 16, wherein the integrating unit further comprises an operational amplifier, the RC integrating circuit being coupled with a first input end of the operational amplifier; and an output end of the operational amplifier being coupled with a second input end of the operational amplifier through a resistor.

18. The LiDAR of claims 14 or 15, further comprising:
a sampling unit coupled with the integrating unit, and configured to sample outputs of the integrating unit.

19. The LiDAR of any one of claims 13 to 15, further comprising:
a temperature detection unit for detecting a temperature of the detector.

**Fig. 1**

**Fig. 2**

## 10

| |
|---|
| receiving, by a detector of the LiDAR, an echo of a detection beam reflected by the target object, and converting the echo into an electrical signal to obtain an echo photocurrent integral |

S101

| |
|---|
| determining the reflectivity of the target object according to a preset reflectivity calibration curve and the echo photocurrent integral |

S102

**Fig. 3**

Photocurrent integral (bit)

Reflectivity R3

reflectivity of
target object

Reflectivity R2

Reflectivity R1

Distance(m)

**Fig. 4**

units triggered by ambient light

units triggered by echo light

**Fig. 5**

<u>20</u>

```
┌─────────────────────────────────────────┐
│ installing the LiDAR and a plate with  a │ ── S201
│       predetermined reflectivity          │
└─────────────────────────────────────────┘
                    │
                    ▼
┌─────────────────────────────────────────┐
│  directing light emitted from the LiDAR to be │ ── S202
│      incident normally to the plate with the   │
│           predetermined reflectivity            │
└─────────────────────────────────────────┘
                    │
                    ▼
┌─────────────────────────────────────────┐
│   moving the plate with the predetermined      │
│     reflectivity under weak ambient light to    │
│   measure a first photocurrent integral curve   │
│  and a second photocurrent integral curve, and  │ ── S203
│    determining a difference therebetween to      │
│       obtain a curve of change of an echo        │
│   photocurrent integral corresponding to the     │
│    reflectivity of the plate of the predetermined│
│           reflectivity with a distance           │
└─────────────────────────────────────────┘
                    │
                    ▼
┌─────────────────────────────────────────┐
│  measuring the first photocurrent integral and  │
│ the second photocurrent integral under strong    │ ── S204
│   ambient light, and determining a difference    │
│   therebetween to obtain an echo photocurrent    │
│                    integral                       │
└─────────────────────────────────────────┘
                    │
                    ▼
┌─────────────────────────────────────────┐
│      calibrating the relationships between an     │
│     equivalent PDE and the echo photocurrent     │ ── S205
│  integral and the second photocurrent integral  │
└─────────────────────────────────────────┘
                    │
                    ▼
┌─────────────────────────────────────────┐
│   replacing with a plate with a predetermined    │ ── S206
│    reflectivity and repeating steps S201-S205    │
└─────────────────────────────────────────┘
                    │
                    ▼
┌─────────────────────────────────────────┐
│     generating a calibration table and storing   │ ── S207
│               same in the LiDAR                  │
└─────────────────────────────────────────┘
```

**Fig. 6A**

Plate with
predetermined
reflectivity

incident laser

LiDAR   reflected laser

back- and- forth movement

**Fig. 6B**

LiDAR **100**

processing unit 130

transmitting unit 110

receiving unit 120

sampling
unit 150

integrating
unit 140

**Fig. 7**

**Fig. 8A**

**Fig. 8B**

## INTERNATIONAL SEARCH REPORT

| International application No. |
| --- |
| **PCT/CN2021/138322** |

| A. | CLASSIFICATION OF SUBJECT MATTER |
| --- | --- |

G01S 7/48(2006.01)i

According to International Patent Classification (IPC) or to both national classification and IPC

| B. | FIELDS SEARCHED |
| --- | --- |

Minimum documentation searched (classification system followed by classification symbols)

G01S

Documentation searched other than minimum documentation to the extent that such documents are included in the fields searched

Electronic data base consulted during the international search (name of data base and, where practicable, search terms used)

WPI, EPODOC, CNPAT, CNKI: 激光雷达, 目标, 反射率, 探测器, 回波, 积分, 曲线, 累积, 时间, 准确率, 差, 斜率; radar, lidar, target, reflectivity, detector, echo, integral, curve, cumulative, accuracy, difference, slope

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 112986951 A (SHANGHAI HESAI TECHNOLOGY CO., LTD.) 18 June 2021 (2021-06-18)<br>     claims 1-19 | 1-19 |
| X | CN 111679290 A (HESAI PHOTONICS TECHNOLOGY CO., LTD.) 18 September 2020 (2020-09-18)<br>     description, paragraphs [0041]-[0062] | 1-19 |
| A | CN 102322843 A (HARBIN INSTITUTE OF TECHNOLOGY) 18 January 2012 (2012-01-18)<br>     entire document | 1-19 |
| A | CN 102323555 A (HARBIN INSTITUTE OF TECHNOLOGY) 18 January 2012 (2012-01-18)<br>     entire document | 1-19 |
| A | CN 111830487 A (MELEXIS TECHNOLOGIES N. V.) 27 October 2020 (2020-10-27)<br>     entire document | 1-19 |
| A | US 2018217240 A1 (SUTENG INNOVATION TECHNOLOGY CO., LTD.) 02 August 2018 (2018-08-02)<br>     entire document | 1-19 |

☐ Further documents are listed in the continuation of Box C.      ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **22 February 2022** | **09 March 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**EP 4 332 616 A1**

| INTERNATIONAL SEARCH REPORT | | | | International application No. | | | |
|---|---|---|---|---|---|---|---|
| Information on patent family members | | | | **PCT/CN2021/138322** | | | |

| Patent document cited in search report | | | Publication date (day/month/year) | Patent family member(s) | | | Publication date (day/month/year) |
|---|---|---|---|---|---|---|---|
| CN | 112986951 | A | 18 June 2021 | None | | | |
| CN | 111679290 | A | 18 September 2020 | None | | | |
| CN | 102322843 | A | 18 January 2012 | None | | | |
| CN | 102323555 | A | 18 January 2012 | None | | | |
| CN | 111830487 | A | 27 October 2020 | EP | 3730967 | A1 | 28 October 2020 |
|  |  |  |  | US | 2020341125 | A1 | 29 October 2020 |
| US | 2018217240 | A1 | 02 August 2018 | WO | 2017193269 | A1 | 16 November 2017 |
|  |  |  |  | US | 2021025992 | A1 | 28 January 2021 |
|  |  |  |  | US | 10838046 | B2 | 17 November 2020 |

Form PCT/ISA/210 (patent family annex) (January 2015)